# FASCICULE DE BREVET EUROPEEN

(11) **EP 1 278 601 B1**
(45) Date de publication et mention de la délivrance du brevet: **30.05.2007**
(21) Numéro de dépôt: 01928037.9
(22) Date de dépôt: 23.04.2001
(51) Int. Cl.: B01L 3/02

(54) **DISPOSITIF POUR ACTIONNER AU MOINS UN PISTON ET SON PROCEDE DE DETECTION D'UNE DEFAILLANCE DANS UN DISPOSITIF**
VORRICHTUNG ZUR BETÄTIGUNG ZUMINDESTENS EINES KOLBENS UND VERFAHREN ZUR ERKENNUNG EINER FEHLFUNKTION BEI DER VORRICHTUNG
DEVICE FOR ACTUATING AT LEAST A PISTON AND METHOD FOR DETECTING FAILURE IN A DEVICE

(30) Priorité: 21.04.2000 FR 0005149
(43) Date de publication de la demande: 29.01.2003
(73) Titulaire: Biomerieux S.A., 69280 Marcy l'Etoile (FR)
(72) Inventeur: COLIN, Bruno, F-69280 Marcy l'Etoile (FR)
(74) Mandataire: de Zeeuw, Johan Diederick
(86) Numéro de dépôt international: PCT/FR2001/001240
(87) Numéro de publication internationale: WO 2001/080999

(56) Documents cités:
- GB-A- 2 064 700
- US-A- 3 975 960

## Description

La présente invention concerne un dispositif pour actionner au moins un piston mobile longitudinalement dans l'alésage d'un corps, le piston étant mobile sous l'action d'un mouvement longitudinal ou courbe d'un bras de commande. L'invention concerne également un procédé de détection d'une défaillance dans un tel dispositif.

L'état de la technique est constitué d'appareils dont le piston coopère avec un bras de commande par l'intermédiaire d'un élément intermédiaire tel qu'une bille. Deux cas de figures existent. Dans le premier cas de figure, la bille ne peut pas sortir du logement où elle se trouve positionnée, par exemple par un sertissage ou une construction particulière (butée, bride, cale...).

Toutefois, ce type d'appareil est plus coûteux à fabriquer du fait des opérations supplémentaires à effectuer lors du montage et aux éléments constructifs complémentaires qui sont nécessités. De plus en cas de problème, le démontage de l'appareil est plus difficile du fait du nombre de pièces plus important et de l'existence d'éléments de fixation entre lesdites pièces de l'appareil.

Dans le second cas de figure, la bille est libre, c'est-à-dire posée à l'endroit où elle doit être active et simplement centrée par des moyens techniques connus, tels que trou borgne, trou traversant avec deux diamètres différents, bossage usiné.

L'inconvénient essentiel de ce mode de réalisation réside dans la perte de la bille ce qui entraîne l'arrêt du mouvement du piston qui devient inactif. Ce problème peut être particulièrement gênant dans les automates, par exemple les automates de diagnostic biologique, où le piston est associé à une seringue ou une pipette permettant le prélèvement d'un liquide biologique. Dans ce genre d'automate, il y a souvent plusieurs pistons montés parallèlement et l'ensemble se trouve dans un habillage qui rend invisible le fonctionnement de l'appareil. De plus, si chaque piston n'est pas associé à un capteur de détection de son activation, ce qui est fort coûteux, il est impossible de détecter une panne due à la perte d'une bille à partir du moment où l'absence de la bille n'empêche pas le fonctionnement de l'automate. Ceci peut induire des faux négatifs ou des faux positifs, avec les conséquences tout à fait néfastes que cela peut générer auprès de patients.

Conformément à la présente invention, le dispositif et le procédé proposés se proposent de répondre à ces inconvénients

A cet effet, la présente invention concerne un dispositif pour actionner au moins un piston mobile longitudinalement dans l'alésage d'un corps, le piston étant mobile sous l'action d'un mouvement longitudinal ou courbe d'un bras de commande, au moyen d'une bille, située entre le piston et le bras de commande, caractérisé par le fait que lorsque la bille quitte sa position entre le piston et le bras, celle-ci entre en contact avec un moyen de récupération de ladite bille associé avec le bras de commande, ce contact étant détectable, ladite bille servant donc également de moyen d'alerte en cas d'absence de ladite bille entre ledit piston et ledit bras.

De façon avantageuse, la bille est absente entre le piston et le bras du fait de l'action d'attraction d'un moyen de récupération et/ou à l'effet d'éjection de ladite bille par un moyen d'évacuation.

Selon un mode de réalisation particulier, la bille est une bille métallique et le moyen de récupération par un aimant.

Le moyen de récupération est préférentiellement associé avec un dégagement facilitant la récupération de la bille.

Ce dégagement est avantageusement associé avec le bras de commande.

Préférentiellement, le moyen de récupération et/ou le dégagement est(sont) situé(s) entre deux éléments intermédiaires adjacents.

Le diamètre de la bille est avantageusement supérieur à la distance séparant le corps du bras de commande, au niveau du moyen de récupération, lorsque ceux-ci sont rapprochés l'un de l'autre.

La présente invention concerne également un procédé de détection d'une défaillance dans un dispositif, tel que décrit ci-dessus, le procédé consistant à faire fonctionner le dispositif normalement et à détecter une cinématique anormale dudit dispositif.

Préférentiellement, la détection d'une cinématique anormale du dispositif est due à la présence de la bille située entre le corps et le bras de commande dudit dispositif, notamment au niveau du moyen de récupération.

Les figures ci-jointes sont données à titre d'exemple explicatif et n'ont aucun caractère limitatif. Elles permettront de mieux comprendre l'invention.
La figure 1 représente une vue en coupe partielle montrant la partie supérieure de deux pistons, chaque piston étant en position avant d'être actionner par des billes, elles-mêmes actionnées par l'intermédiaire d'un bras de commande, selon un mode particulier mais représentatif de l'état de la technique.
La figure 2 représente une vue en coupe partielle selon la figure 1, lorsque le bras de commande actionne les pistons et qu'il n'y a pas de problème au niveau des billes de transmission du mouvement.
La figure 3 représente une vue en coupe partielle selon la figure 1, lorsque le bras de commande actionne les pistons et qu'il y a un problème au niveau des billes de transmission du mouvement, l'une des billes s'étant échappée.
La figure 4 représente une vue en coupe partielle, d'un premier mode de réalisation de la présente invention, montrant la partie supérieure de deux pistons, chaque piston étant en position avant d'être actionné par des billes, elles-mêmes actionnées par l'intermédiaire d'un bras de commande.
La figure 5 représente une vue en coupe partielle selon la figure 4, lorsque le bras de commande actionne les pistons et qu'il n'y a pas de problème au niveau des billes de transmission du mouvement.
La figure 6 représente une vue en coupe partielle selon la figure 4, lorsque le bras de commande actionne les pistons et qu'il y a un problème au niveau des billes de transmission du mouvement, l'une des billes s'étant échappée.
La figure 7 représente une vue en coupe partielle, d'un second mode de réalisation de la présente invention, montrant la partie supérieure de deux pistons, chaque piston étant en position avant d'être actionner par des billes, elles-mêmes actionnées par l'intermédiaire d'un bras de commande.

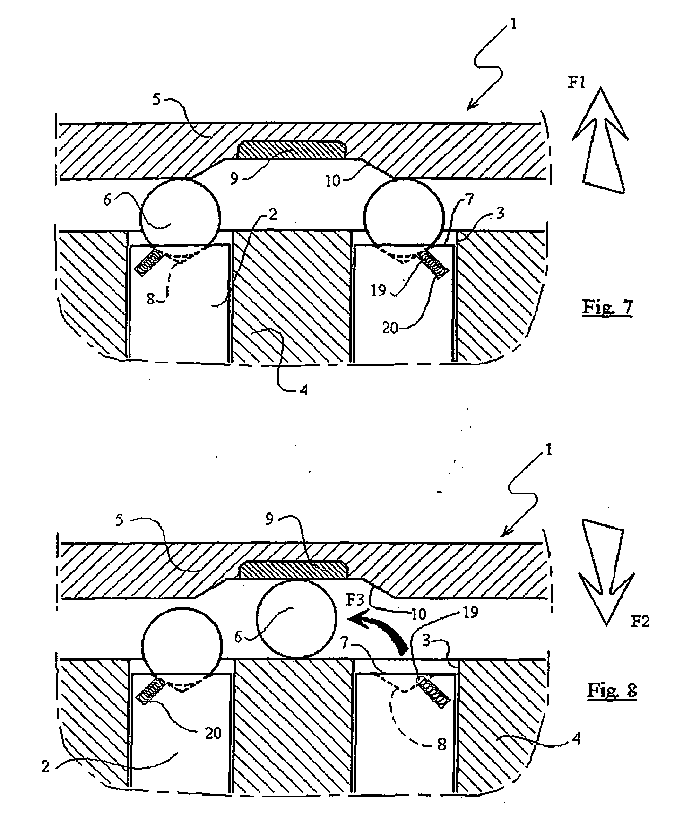

Enfin, la figure 8 représente une vue en coupe partielle selon la figure 7, lorsque le bras de commande actionne les pistons et qu'il y a un problème au niveau des billes de transmission du mouvement, l'une des billes s'étant échappée.

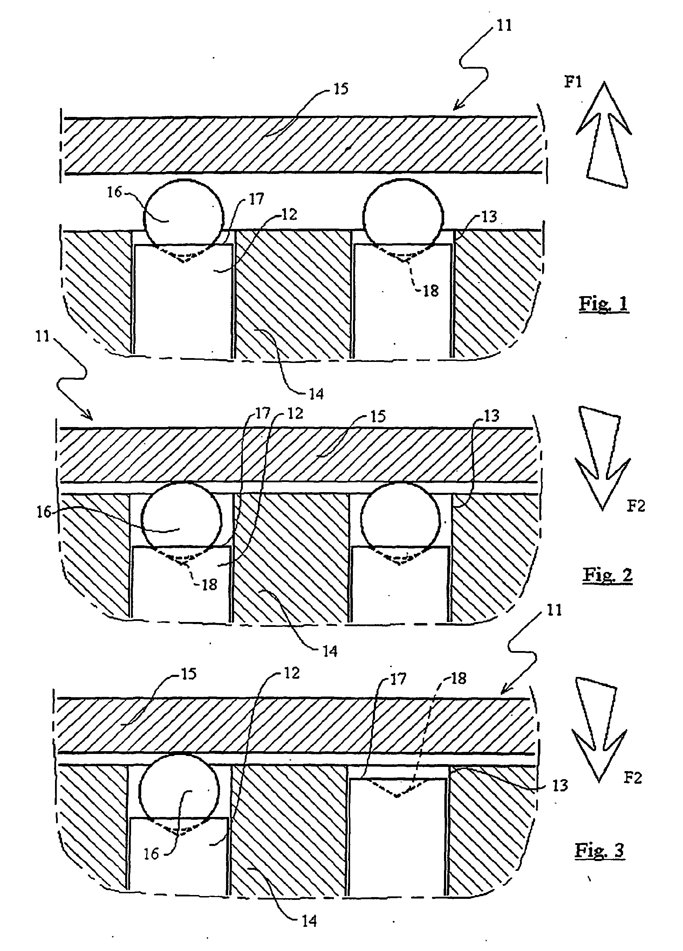

Les figures 1 à 3 représentent l'état de la technique le plus proche connu de la demanderesse. Dans cet état de la technique, le dispositif 11 permet d'actionner au moins deux pistons mobiles 12 situés dans deux alésages 13 parallèles. Ces alésages 13 sont percés dans le corps 14 dudit dispositif 11.

La face supérieure 17 de chaque piston 12 comporte un moyen de centrage 18 généralement constitué par un évidemment concave en forme de cône 18, cet évidement 18 peut néanmoins avoir différentes formes. Ce moyen de centrage 18 reçoit un élément intermédiaire 16 qui est constitué selon le mode de réalisation de l'état de la technique présenté sur les figures 1 à 3 par une bille 16. Le diamètre de la bille 16 est inférieur au diamètre du piston 12, qui est lui-même inférieur au diamètre de l'alésage 13.

L'ensemble bille 16 et piston 12 est donc mobile selon les flèches F1 et F2. Le mouvement selon F1, consistant en un éloignement du piston mobile 12 par rapport à un bras de commande 15, s'effectue sous l'action de tous moyens connus de l'état de la technique, comme par exemple un ressort de rappel. Le mouvement selon F2, consistant en un rapprochement dudit piston mobile 12 par rapport à au bras de commande 15, s'effectue par simple déplacement du bras de commande 15. Ce mouvement selon F2 peut être longitudinal, c'est-à-dire coaxiale au mouvement qui sera généré au niveau du piston 12 ou bien ce mouvement peut être courbe si par exemple le bras de commande 15 est monté par rapport au corps 14, directement ou indirectement, par l'intermédiaire d'un axe d'articulation ou de pivotement non représenté sur les figures.

On comprend donc aisément que lorsque les billes sont présentes il n'y a aucun problème et que les deux pistons vont être mus selon F2 comme cela est bien représenté sur la figure 2.

Par contre, lorsqu'une des billes 16 s'est échappée; ce qui est le cas représenté sur la figure 3, on remarque que le bras de commande 15 est descendu selon F2, et n'a enfoncé que le piston 12 situé à gauche de la figure. Le piston 12 situé à droite de la figure est resté immobile. L'absence de la bille n'a pourtant pas gêné le mouvement dudit bras 15. Cette absence de ladite bille 16 n'est donc pas perceptible pour l'utilisateur ou même pour le logiciel qui met en oeuvre le dispositif 11.

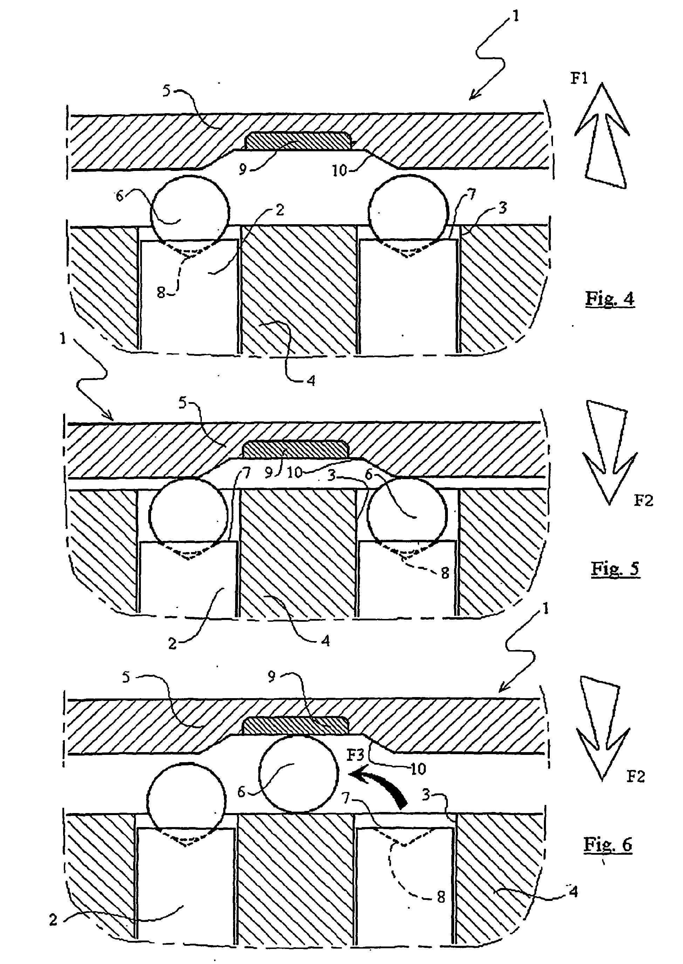

Selon la présente invention, l'ensemble des caractéristiques qui a été évoqué aux figures 1 à 3 et repris dans les figures 4 à 6 pour le premier mode de réalisation de la présente invention et dans les figures 7 et 8 pour le second mode de réalisation de la présente invention. Néanmoins, les numéros sont légèrement modifiés.

Ainsi, selon le premier mode réalisation de l'invention, on retrouve le dispositif 1 qui permet d'actionner les deux pistons mobiles 2. Chaque piston mobile 2 est logé dans un alésage 3 présent au sein du corps 4 constituant le dispositif 1 en association avec le bras de commande 5. L'élément intermédiaire est référencé 6 et est également constitué par une bille 6. La surface supérieure 7 du piston 2 comporte également un moyen de centrage 8 de structure sensiblement identique à la structure du moyen représenté sur les figures 1 à 3.

Toujours selon les figures 4 à 6 on remarque néanmoins, une modification assez importante pour mettre la mise en oeuvre du procédé selon l'invention. Cette différence structurelle définit le dispositif 1 selon la présente invention par rapport au dispositif 11 de l'état de la technique. Ainsi, on remarque que la face inférieure sur les figures 4 à 6 du bras de commande 5 comporte un évidement 10 qui est situé entre les deux billes 6 des deux pistons 12 situés au voisinage l'un de l'autre.

Au fond de l'évidement 10, est présent un moyen de récupération 9 de l'élément intermédiaire 6. Ce moyen de récupération 9 est, selon un mode préférentiel de réalisation, constitué par un aiment 9. Dans ce cas, la bille 6 est de constitution métallique pour pouvoir coopérer avec l'aiment 9 en cas de fuite, selon F3 comme cela est bien représenté sur la figure 6.

On comprend donc aisément que lorsque la bille 6 se trouve présente entre le corps 4 et le bras de commande 5, au niveau du moyen de récupération 9, la bille 6 va empêcher la descente dudit bras 5 selon F2, ce qui aura tendance a perturbé la cinématique du bras 5. Dans ce cas, il sera donc beaucoup plus aisé pour l'utilisateur ou pour le logiciel commandant le dispositif 1, de détecter un mauvais fonctionnement et de diagnostiquer rapidement les raisons de ce mauvais fonctionnement.

Selon le second mode de réalisation, représenté sur les figures 7 et 8, montre que le premier mode de réalisation des figures 4 à 6 peut comporter un perfectionnement qui améliore encore l'échappement F3 de la bille 6 et la détection par coincement de ladite bille 6 entre le corps 4 et le bras de commande 5 du dispositif 1 selon l'invention.
Dans ce second mode de réalisation, un moyen d'évacuation 19. de l'élément 6, constitué par un ressort, est présent et facilite l'échappement selon F3 dudit élément en direction du moyen de récupération ou aimant 9. Ce moyen d'évacuation 19 est constitué par un ressort 19 présent dans un logement 20. Lorsque la bille 6 est présente entre le bras de commande 5 et le moyen de centrage 8 positionné sur la surface 7 du piston 2, le ressort 19 subi une faible compression, par exemple de l'ordre de quelques dizaines de gramme alors que la pression exercée par ledit bras 5 est supérieure, c'est-à-dire de l'ordre d'au moins 100 grammes à quelques kilogrammes.

L'orientation du ressort 19 et donc du logement 20 est telle que lorsqu'il est possible que la bille 6 s'échappe selon F3, ledit ressort 19 n'est plus contraint par le bras 5, ainsi la bille 6 peut s'échapper en direction de l'aimant 9. Pour se faire, l'axe longitudinal dudit ressort 19 et donc dudit logement 20 coupe le moyen de récupération 9. Dans le mode de réalisation des figures 7 et 8, un moyen de récupération 9 est présent entre deux billes 6 et les deux ressorts 19 associés ont des axes longitudinaux qui se croisent. Il est également possible d'avoir un moyen de récupération 9 associé à une bille 6 unique.

### REFERENCES

1. Dispositif pour actionner au moins un piston mobile 2 selon l'invention
2. Piston mobile selon l'invention
3. Alésage du corps 4 où le piston 2 est mobile selon l'invention
4. Corps du dispositif 1 selon l'invention
5. Bras de commande du dispositif 1 selon l'invention
6. Elément intermédiaire ou bille selon l'invention
7. Surface supérieure du piston 2 selon l'invention
8. Moyen de centrage de l'élément 6 sur la surface 7 selon l'invention
9. Moyen de récupération de l'élément 6 ou aimant selon l'invention
10. Dégagement au voisinage du moyen de récupération 9 selon l'invention
11. Dispositif pour actionner au moins un piston mobile 12 selon l'état de la technique
12. Piston mobile selon l'état de la technique
13. Alésage du corps 14 où le piston 12 est mobile selon l'état de la technique
14. Corps du dispositif 11 selon l'état de la technique
15. Bras de commande du dispositif 11 selon état de la technique
16. Elément intermédiaire ou bille selon l'état de la technique
17. Surface supérieure du piston 12 selon l'état de la technique
18. Moyen de centrage de l'élément 16 sur la surface 17 selon l'état de la technique
19. Moyen d'évacuation de l'élément 6 ou ressort selon l'invention
20. Logement contenant le moyen 19
F1. Eloignement du bras de commande 5 ou 15 par rapport au piston mobile 2 ou 12
F2. Rapprochement du bras de commande 5 ou 15 par rapport au piston mobile 2 ou 12
F3. Echappement de l'élément 6

## Revendications

1. Dispositif (1) pour actionner au moins un piston mobile (2) longitudinalement dans l'alésage (3) d'un corps (4), le piston (2) étant mobile sous l'action d'un mouvement longitudinal ou courbe (F2) d'un bras de commande (5), au moyen d'une bille (6), située entre le piston (2) et le bras de commande (5), **caractérisé par le fait que** lorsque la bille (6) quitte sa position entre le piston (2) et le bras (5), celle-ci (6) entre en contact avec un moyen de récupération (9) de ladite bille (6) associé avec le bras de commande (5), ce contact étant détectable, ladite bille (6) servant donc également de moyen d'alerte en cas d'absence de ladite bille (6) entre ledit piston (2) et ledit bras (5).

2. Dispositif, selon la revendication 1, **caractérisé par le fait que** la bille (6) est absente entre le piston (2) et le bras (5) du fait de l'action d'attraction d'un moyen de récupération (9) et/ou à l'effet d'éjection de ladite bille (6) par un moyen d'évacuation (19).

3. Dispositif, selon l'une quelconque des revendications précédentes **caractérisé par le fait que** la bille (6) est une bille métallique (6) et le moyen de récupération (9) est un aimant (9).

4. Dispositif, selon l'une quelconque des revendications précédentes, **caractérisé par le fait que** le moyen de récupération (9) est associé avec un dégagement (10) facilitant la récupération de la bille (6).

5. Dispositif, selon la revendication 4, **caractérisé par le fait que** le dégagement (10) est associé avec le bras de commande (5).

6. Dispositif, selon l'une quelconque des revendications 4 à 5, **caractérisé par le fait que** le moyen de récupération (9) et/ou le dégagement (10) est(sont) situé(s) entre deux éléments (6) adjacents.

7. Dispositif, selon l'une quelconque des revendications précédentes, **caractérisé par le fait que** le diamètre de la bille (6) est supérieur à la distance séparant le corps (4) du bras de commande (5), au niveau du moyen de récupération (9), lorsque ceux-ci (4 et 5) sont rapprochés (F2) l'un (4) de l'autre (5).

8. Procédé de détection d'une défaillance dans un dispositif, selon l'une quelconque des revendications 1 à 7, **caractérisé en ce qu'**il consiste à faire fonctionner le dispositif (1) normalement et à détecter une cinématique anormale de celui-ci (1).

9. Procédé, selon la revendication 8, **caractérisé en ce que** la détection d'une cinématique anormale de celui-ci (1) est due à la présence de la bille (6) située entre le corps (4) et le bras de commande (5) dudit dispositif (1), notamment au niveau du moyen de récupération (9).

## Claims

1. A device (1) for actuating at least one piston (2) which is longitudinally mobile within the bore (3) of a body (4), the piston (2) being mobile under the action of a longitudinal or curved motion (F2) of a control arm (5), by means of a ball (6) located between the piston (2) and the control arm (5), **characterised in that** when the ball (6) leaves its position between the piston (2) and the arm (5), it (6) comes into contact with a recovery means (9) of said ball (6) associated with the control arm (5), this contact being detectable, said ball (6) hence acting also as an alarm means in the event of said ball (6) being missing between said piston (2) and said arm (5).

2. The device according to Claim 1, **characterised in that** the ball (6) is missing between the piston (2) and the arm (5) due to the attraction action of a recovery means (9) and/or to the ejection of said ball (6) by a removal means (19).

3. The device according to any one of the preceding claims **characterised in that** the ball (6) is a metal ball (6) and the recovery means (9) is a magnet (9).

4. The device according to any one of the preceding claims, **characterised in that** the recovery mans (9) is associated with a recess (10) which facilitates the recovery of the ball (6).

5. The device according to Claim 4, **characterised in that** the recess (10) is associated with the control arm (5).

6. The device according to any one of Claims 4 to 5, **characterised in that** the recovery means (9) and/or the recess (10) is (are) located between two adjacent members (6).

7. The device according to any one of the preceding claims, **characterised in that** the diameter of the ball (6) is greater than the distance between the body (4) and the control arm (5), at the recovery means (9), when these (4 and 5) are brought closer (F2) one (4) to the other (5).

8. A method for detecting a failure in a device, according to any one of Claims 1 to 7, **characterised in that** it consists in operating the device (1) normally and in detecting an abnormal kinematics thereof (1).

9. The device according to Claim 8, **characterised in that** the detection of an abnormal kinematics thereof (1) is due to the presence of the ball (6) located between the body (4) and the control arm (5) of said device (1), notably at the recovery means (9).

## Patentansprüche

1. Vorrichtung (1) zur Betätigung mindestens eines beweglichen Kolbens (2) in Längsrichtung in der Bohrung (3) eines Körpers (4), wobei der Kolben (2) unter der Wirkung einer Längsbewegung oder einer gekrümmten Bewegung (F2) eines Steuerarms (5) mittels einer Kugel (6) beweglich ist, die sich zwischen dem Kolben (2) und dem Steuerarm (5) befindet, **dadurch gekennzeichnet, dass**, wenn die Kugel (6) ihre Stellung zwischen dem Kolben (2) und dem Arm (5) verlässt, sie (6) mit einem Aufnahmemittel (9) der Kugel (6) in Kontakt kommt, das dem Steuerarm (5) zugeordnet ist, wobei dieser Kontakt erfassbar ist, wobei die Kugel (6) also ebenfalls als Warnmittel für den Fall dient, wenn die Kugel (6) sich nicht zwischen dem Kolben (2) und dem Arm (5) befindet.

2. Vorrichtung nach Anspruch 1, **dadurch gekennzeichnet, dass** die Kugel (6) aufgrund der Anziehungswirkung eines Aufnahmemittels (9) und/oder der Wirkung des Auswurfs der **Kugel (6) durch ein Evakuierungsmittel (19) nicht zwischen** dem Kolben (2) und dem Arm (5) vorhanden ist.

3. Vorrichtung nach einem der vorhergehenden Ansprüche, **dadurch gekennzeichnet, dass** die Kugel (6) eine Metallkugel (6) und das Aufnahmemittel (9) ein Magnet (9) ist.

4. Vorrichtung nach einem der vorhergehenden Ansprüche, **dadurch gekennzeichnet, dass** das Aufnahmemittel (9) einer Aussparung (10) zugeordnet ist, die die Aufnahme der Kugel (6) erleichtert.

5. Vorrichtung nach Anspruch 4, **dadurch gekennzeichnet, dass** die Aussparung (10) dem Steuerarm (5) zugeordnet ist.

6. Vorrichtung nach einem der Ansprüche 4 bis 5, **dadurch gekennzeichnet, dass** das Aufnahmemittel (9) und/oder die Aussparung (10) zwischen zwei benachbarten Elementen (6) angeordnet ist (sind).

7. Vorrichtung nach einem der vorhergehenden Ansprüche, **dadurch gekennzeichnet, dass** der Durchmesser der Kugel (6) größer ist als der Abstand, der den Körper (4) vom Steuerarm (5) in Höhe des Aufnahmemittels (9) trennt, wenn diese (4 und 5) einander angenähert werden (F2).

8. Verfahren zur Erfassung einer Störung in der Vorrichtung nach einem der Ansprüche 1 bis 7, **dadurch gekennzeichnet, dass** es darin besteht, die Vorrichtung (1) normal arbeiten zu lassen und eine anormale Kinematik dieser Vorrichtung (1) zu erfassen.

9. Verfahren nach Anspruch 8, **dadurch gekennzeichnet, dass** die Erfassung einer anormalen Kinematik dieser (1) durch das Vorhandensein der zwischen dem Körper (4) und dem Steuerarm (5) der Vorrichtung (1) befindlichen Kugel (6) insbesondere in Höhe des Aufnahmemittels (9) verursacht wird.
